# EUROPEAN PATENT APPLICATION

(11) **EP 2 476 923 A2**
(43) Date of publication of application: **18.07.2012**
(21) Application number: 12150485.6
(22) Date of filing: 09.01.2012
(51) Int. Cl.: F16B 47/00

(54) **Suction apparatus and method of use thereof**

(30) Priority: 12.01.2011 GB 201100478
(71) Applicant: Asque Ltd., London W12 9DP (GB)
(72) Inventor: Buckley, Mark, London, W12 9DP (GB)
(74) Representative: Tomkinson, Alexandra

(57) **Abstract**

Suction Apparatus (2) is provided including a body portion (4) having at least a first suction surface (6) for attachment to a suitable surface in use via suction. An aperture (12) or channel is defined in said at least first suction surface.

## Description

This invention relates to suction apparatus and a method of use thereof.

Although the following description refers almost exclusively to suction apparatus for use on or with a toy, it will be appreciated by persons skilled in the art that the suction apparatus of the present invention could be used in any suitable application and is not limited to use on or with a toy.

It is known to provide suction apparatus in the form of a suction cup for allowing one or more items associated with the suction cup to be secured to a suitable surface in use. Conventional suction cups typically include a suction surface that is generally curved in shape such that when it is pressed against a flat, non-porous attachment surface, the air between the curved surface and the attachment surface is forced out past the peripheral edge of the curved surface. This forms a vacuum or partial vacuum in the space between the curved surface and the attachment surface. The air pressure externally of the suction cup is therefore greater than the air pressure in the space between the curved surface and the attachment surface, thereby retaining engagement of the suction cup to the attachment surface until such time that sufficient force, such as a pulling force, is applied to the suction cup to overcome the difference in air pressure to allow detachment of the suction cup from the attachment surface, or until sufficient air flows back into the space to equalise the air pressure.

A problem with conventional suction cups is that they are not normally suitable for use in applications relating to children due to safety concerns. The curved surface of the suction cup is typically continuous and this could block a child's airways if the cup is swallowed by the child.

It is therefore an aim of the present invention to provide suction apparatus that overcomes the abovementioned problems.

It is a further aim of the present invention to provide a method of use of suction apparatus that overcomes the abovementioned problems.

According to a first aspect of the present invention there is provided suction apparatus, said suction apparatus including a body portion having at least a first suction surface for attachment to a suitable surface in use via suction, and wherein an aperture or channel is defined in said at least first suction surface.

Preferably said aperture or channel is open to atmosphere at least when the suction apparatus is in a non-suction or out-of-use position. This allows air or fluid located between the suction surface and the attachment surface just prior to use of the apparatus to flow freely through said aperture and/or opening to atmosphere.

Preferably the aperture or channel is a spaced distance apart from the outermost peripheral edge(s) defining the first suction surface.

The at least first suction surface is formed such that when the at least first suction surface of the apparatus is brought into engagement with an attachment surface and pressure is applied to the same against the attachment surface, this forces the air or fluid contained in a cavity defined between the suction surface and the attachment surface out through the aperture or channel and/or the outer peripheral free edges of the at least first suction surface. A vacuum or partial vacuum is formed in the remaining space between the suction surface and the attachment surface. The negative air or fluid pressure of this space compared to the surrounding external air or fluid pressure is such that the apparatus is retained in engagement with the attachment surface until sufficient force is applied to the apparatus to overcome the difference in air or fluid pressure and remove the apparatus from the attachment surface and/or until sufficient air or fluid flows into the vacuum space to reduce the suction force.

In one embodiment said aperture or channel has an opening defined on the at least first suction side of said suction surface and an opening defined on a non-suction side of said surface or body portion.

Preferably the aperture on the suction surface and/or the opening defined on the non-suction side of the body portion is open to atmosphere.

Preferably the non-suction side of the body portion is opposite to the suction side of the body portion.

In one embodiment the at least first suction surface includes a base wall or diaphragm and a side wall to define a cup like element. The aperture or channel is defined in the base wall or diaphragm.

Preferably the side wall is capable of moving or is arranged to move relative to the base wall in use, thereby allowing the peripheral free edges of the base wall and side wall to easily contact a surface to which the apparatus is to be attached to in use. This movement typically takes place on moving the apparatus from an out-of-use or non-suction position to an in-use or suction position.

Preferably the side wall is arranged to move through a different angle or direction to that of the base wall in moving from the out-of-use position to the in-use position.

Thus, in one embodiment the peripheral free edges of the base wall and side wall form at least four separate points of contact of the apparatus with the attachment surface in use when viewed in cross section (such as for example a cross section taken through the middle of the apparatus). This is in contrast to prior art device which typically only makes two points of contact with an attachment surface when viewed in cross section (i.e. the two peripheral edges of the side walls).

Thus, the present invention in one embodiment has an additional inner contact edge with the attachment surface (i.e. the edge defining the aperture or channel), thereby increasing the surface area of the suction apparatus which can allow fluid or air to pass therethrough in order to actuate the suction apparatus and increases the surface area of edges in sealing engagement with the attachment surface in use.

Preferably in moving the side wall relative to the base wall of the apparatus in use (i.e. between the out of use and in-use positions), the interior angle on the suction surface between the side wall and base wall increases.

In one embodiment the base wall is a substantially flat or linear surface. In an alternative embodiment the base wall has two or more angled parts to form a non-linear surface. The angled parts typically provide the base wall with greater flexibility, thereby allowing the apparatus to be fitted to a greater range of shaped surfaces. It increases the vacuum void created on the suction side of the apparatus, thereby providing the apparatus with a greater suction force.

In one embodiment a first part of the base wall is provided at a substantially acute angle with respect to the side wall on the suction side of the apparatus and the second part of the base wall is provided at a substantially obtuse angle with respect to the first part.

In one embodiment the at least first suction surface of the apparatus is in the form of a truncated cone, with the outer free edge of the surface or side wall with a wider diameter than the diameter of the base wall.

Preferably at least a first part of the at least first suction surface is formed from any or any combination of substantially flexible material, such that the base wall can be moved relative to the side wall. For example, the at least first suction surface can be formed from rubber, plastic and/or the like.

In one embodiment two or more suction surfaces are defined on the apparatus. The suction surfaces can be provided on opposite sides of the apparatus or can be provided at any required angle relative to each other.

In one example the apparatus is an integral component.

Preferably the non-suction surface includes a side wall and a base wall.

In one embodiment the side wall of the non-suction surface is substantially perpendicular to the base wall of the non-suction surface.

Preferably the opening of the aperture defined in the base wall of the non-suction surface is opposite the opening of the aperture define in the base wall of the suction surface.

In one embodiment a recess defined between the side wall of the non-suction surface and the base wall of the non-suction surface is used to engage one or more items therein.

Engagement means can be associated with the non-suction surface and/or side wall to allow one or more items to be engaged therewith in use.

Preferably the aperture is defined substantially centrally of the base wall, suction surface and/or non-suction surface.

The attachment surface can be a flat surface, curved surface, convex surface, symmetrical surface, non-symmetrical or irregular shaped surface and/or the like.

The suction apparatus can be any suitable size, shape and/or design. In a preferred embodiment the shape of the suction side of the apparatus in plan view is substantially circular. In a further preferred embodiment the shape of aperture in the suction apparatus is substantially circular.

Preferably the peripheral free edges of the side wall and/or base wall in contact with the attachment surface around substantially the entire peripheral edges and provides a substantially continuous attachment surface.

According to a second aspect of the present invention there is provided a method of using suction apparatus, said suction apparatus including a body portion having at least a first suction surface, said method including the step of attaching the at least first suction surface to a suitable surface in use via suction, and wherein an aperture or channel is defined in said at least first suction surface.

Preferably the method includes the step of engaging a peripheral edge of the outermost surface of the first suction surface and a peripheral edge of the aperture or channel with the attachment surface.

According to a further aspect of the present invention there is provided a three dimensional structure, said 3-D structure comprising two or more parts and wherein suction apparatus is used to secure said two or more parts together in use.

In one embodiment the 3-D structure is in the form of a toy. In one example, the toy includes a body part and one or more objects, limbs, heads, other body parts and/or the like are attached to the first body part using suction apparatus.

Preferably one of the parts is joined to the at least first suction surface of the apparatus and one of the parts is joined to a non-suction surface of the apparatus or a further suction surface of the apparatus.

Preferably the item or part that is located with the suction apparatus on the non-suction side has an aperture, channel, recess and/or the like defined therein to allow fluid from the suction side of the suction apparatus to pass through the suction apparatus aperture to the non-suction side and vent to atmosphere through the aperture, channel, recess and/or the like defined in the item.

The suction apparatus of the present invention is particularly advantageous for use on a child's toy where safety considerations dictate that the apparatus must be formed so as to block the airways of a child in the event it is swallowed by the child.

Preferably the suction apparatus allows relative movement of or between the two or more parts in use.

Preferably the toy is a modular toy including a plurality of parts that are attached together via attachment means. At least one of said attachment means is in the form of suction apparatus according to the present invention.

Preferably the suction apparatus is capable of movement across the attachment surface when in an in-use or suction position on said attachment surface.

Embodiments of the present invention will now be described with reference to the accompanying figures, wherein:
Figure 1 is a cross sectional view of suction apparatus according to an embodiment of the present invention;
Figure 2 is a cross sectional view of the suction apparatus in figure 1 attached to a curved surface in use;
Figure 3 is a cross sectional view of suction apparatus according to a further embodiment of the present invention;
Figure 4 is a cross sectional view of the suction apparatus in figure 3 attached to a curved surface in use;
Figure 5 is a cross sectional view of the suction apparatus in figure 3 attached to the outer surface of a ball or circular object;
Figure 6 is a schematic view of how the apparatus in figure 5 can be moved across the surface of the circular object;
Figure 7 is a cross sectional view of the suction apparatus in figure 3 attached to a curved surface of irregular shape;
Figure 8 is a cross sectional view of the suction apparatus in figure 3 attached to a flat surface in use;
Figure 9 is a cross sectional view of the suction apparatus in figure 3 in which fluid can pass through an aperture of the apparatus and the curved surface;
Figure 10 is one example of suction apparatus showing the dimensions of the same;
Figure 11 is an example of a toy that is constructed using suction apparatus according to the present invention;
Figure 12 is an example of fluid flow device that is constructed using suction apparatus according to the present invention;
Figure 13 is a cross sectional view of suction apparatus attached to an attachment surface showing fluid communication from the attachment surface to atmosphere according to an embodiment of the present invention;
Figure 14 is a plan view of suction apparatus according to an embodiment of the present invention.

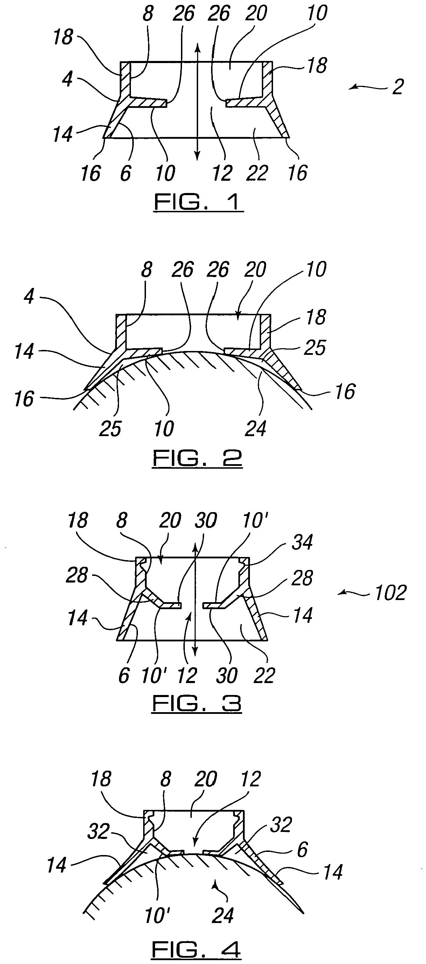

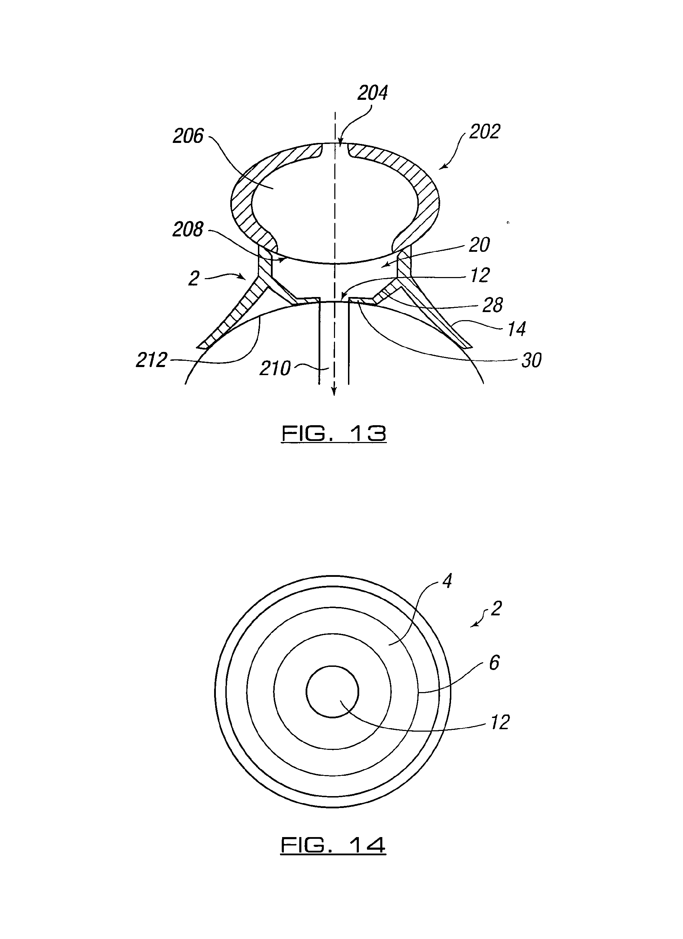

Referring firstly to figure 1, there is illustrated suction apparatus 2 comprising a body portion 4 having a suction surface 6 and a non-suction surface 8. The suction surface is typically substantially circular in shape when viewed in plan, as shown in figure 14, but it will be appreciated that the suction surface could be any suitable shape.

The suction surface 6 includes a base wall 10 with an aperture 12 defined centrally of the same. The aperture in this example is substantially circular in shape when viewed in plan, but could be any shape. Outwardly tapered side walls 14 are joined to the outermost edges of base wall 10. As such, in this example, the suction surface 6 is in the shape of a truncated cone with the free peripheral edge 16 of the side walls having a wider diameter than the diameter of the base wall 10. The suction surface of the side walls 14 form an obtuse angle with the suction surface of the base wall 10. A recess 22 is defined between base wall 10 and side walls 14 when the apparatus is not in a suction position or out-of-use position.

The non-suction surface 8 includes base wall 10 and side walls 18. The side walls 18 are substantially perpendicular to base wall 10. A recess 20 is defined between base wall 10 and side walls 18. The recess 20 has an opening to atmosphere opposite base wall 10.

The apparatus is typically formed from sufficiently flexible and/or resilient material, such as for example rubber or plastic, to allow the suction surface of the apparatus to be pressed against an outer curved surface 24 in use, as shown in figure 2, and to resume an original form once the suction engagement has been removed (i.e. once the vacuum seal has been broken between the apparatus and the attachment surface). The dimensions of aperture 12 defined in base wall 10 are such that the inner peripheral free edge 26 of the base wall 10 defining aperture 12 can engage with the surface 24 in addition to the outer peripheral free edge 16 of the side wall 14 when depressed against surface 24 in use. As such, the two free edges 26, 16 create four points of contact on surface 24 when viewed in cross section (or two engagement edges; an outer side wall engagement edge and an inner base wall engagement edge). Air or fluid contained within the recess 22 on the suction side is forced out through aperture 12 and under peripheral edges 16 when attached to an attachment surface 24 to form vacuum voids 25 between the two engagement edges. Air passing through aperture 12 is vented directly to atmosphere.

The recess 20 defined on the non-suction side of the body portion remains substantially unchanged in shape during attachment of the apparatus to an attachment surface (i.e. it remains substantially the same shape in both the in-use position and the out-of-use position) and can be used to engage one or more items therewith as shown in further embodiments described in more detail below.

A further embodiment of the apparatus 102 of the present invention is shown in figure 3. In this embodiment a base wall 10' is shown that has a first part 28 adjacent the side wall 14 and a second part 30 adjacent the aperture 12. The first part 28 of the base wall 10' is at an acute angle to side wall 14 on the suction side and at an obtuse angle to side wall 18 on the non-suction side. A second part 30 of base wall 10' is at an obtuse angle to first part 28 and is substantially perpendicular to side wall 18. This arrangement is advantageous in that it increases the flexibility of the base wall, thereby allowing it to be attached to different surfaces of varied or different curvature. It increases the vacuum void 32 (or area of negative fluid pressure) created on the suction side between the inner free peripheral edge 26 of the base wall 10' and the outer free peripheral edge 16 of the side wall 14, as shown in figure 4. In addition, it increases the surface area of the inner contact surface of the apparatus with surface 24 since second part 30 of the base wall 10' is substantially in contact with surface 24.

Engagement means in the form of a channel 34 can be defined on inner surface of side wall 18 to allow an item located in recess 20 to be engaged therewith in use.

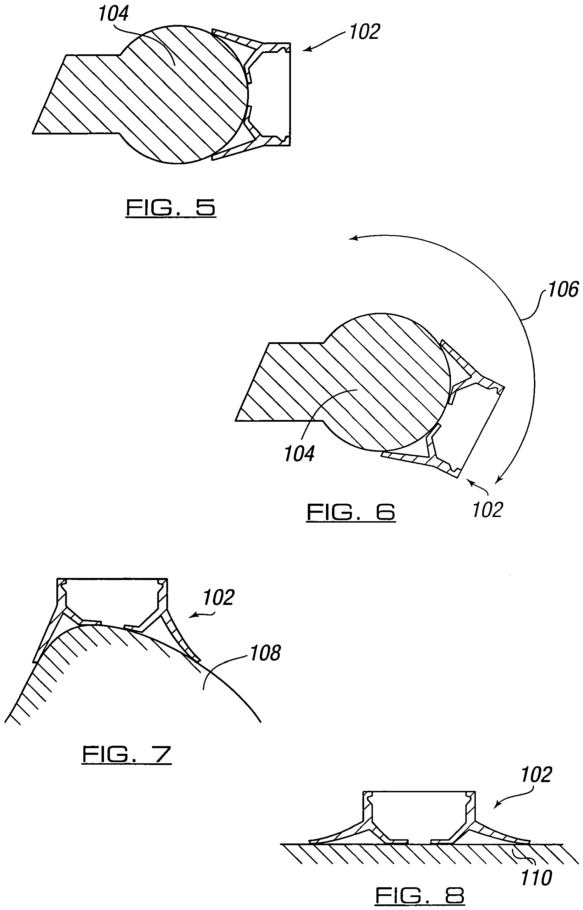

Figure 5 shows the suction apparatus 102 attached to an outer surface of a ball 104. The suction surface 6 can be moved across the outer surface of ball 104 whilst maintaining suction engagement with the same, as shown by arrow 106 in figure 6. This allows suction apparatus 102 to act as a ball joint for a toy or similar item. This movement is at least partly possible due to the unique shape of the suction surface. A lubricant may need to be used to allow motion, such as translational motion, of the suction surface across the attachment surface.

Three degrees of rotational movement can typically be achieved with the ball joint arrangement.

Figure 7 shows how the arrangement of the base wall 10' and side wall 14 allows apparatus 102 to be fitted to an outer surface 108 having an irregular curved shape.

Figure 8 shows how apparatus 102 can also be attached to a flat surface 110 and can be used in a conventional manner.

It will be appreciated that the dimensions of the aperture in the base wall can be adjusted so as to allow the apparatus to fit different shaped or profiled attachment surfaces.

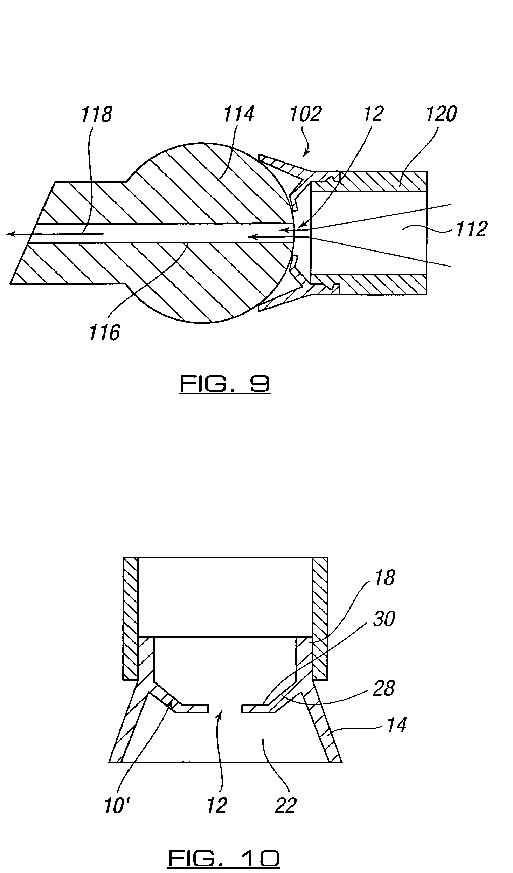

Since the aperture 12 in the base wall is open to atmosphere when the apparatus is attached to a surface in use, fluid such as water 112 can be pumped through aperture 12 and into a channel 116 defined in the attachment surface 114, as shown by arrow 118 in figure 9. Part of a suitable pump or other fluid containing device 120 can be engaged in recess 20 on the non-suction side of the apparatus to allow the fluid to flow through the suction apparatus and attachment surface.

Referring to figure 10, the dimensions are shown for one example of the suction apparatus but it will be appreciated that the dimensions shown in no way limit the invention. In this example the central aperture 12 in base wall 10' is approximately 6mm in diameter. The length of each second base wall part is 6mm to provide a diameter of 18mm between the outermost ends of the second base wall parts. The diameter between the peripheral free edges of the side walls 14 on the suction side are 32mm. The inner angle of the peripheral free edge of the side wall with the horizontal is approximately 75 degrees when in an out-of-use position. The vertical distance between the second part of the base wall and the end of the first part of the base wall joined to side wall 14 is approximately 3mm. The vertical distance between the second part of the base wall and the peripheral edge of the side wall 14, when not in use, is approximately 7mm.

The diameter of the central aperture of the base wall is such so as to provide the base wall with sufficient flexibility for the peripheral free edges of the base wall defining the aperture to form sealing engagement with the attachment surface in use. Thus, in use of the suction apparatus, the vertical height between the peripheral free edges of the side walls and the peripheral free edges of the base wall defining the aperture decreases in the "in-use" suction position compared to the "out-of-use" non-suction position.

The side wall and base wall of the suction surface are sufficiently flexible that they can be moved outwardly apart from each other to make contact with a curved or irregular shaped attachment surface. The angle between the joined ends of the side wall and base wall typically increases as the suction surface is moved from the "out-of-use" non-suction position to the "in-use" suction position.

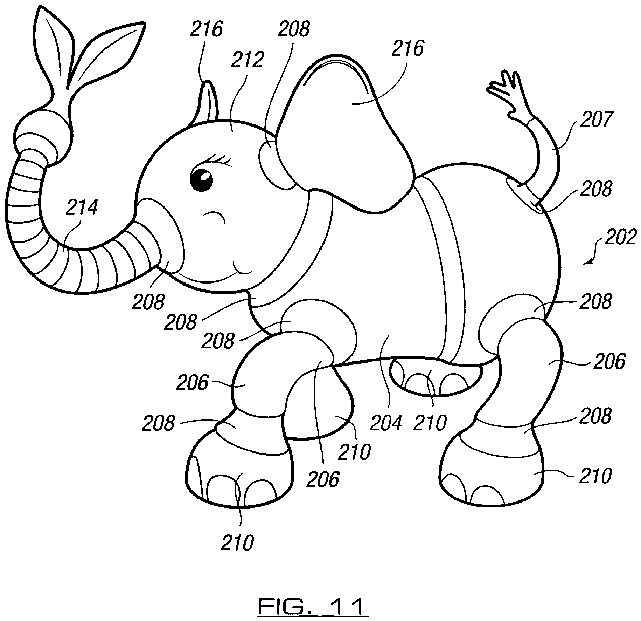

Figure 11 illustrates a child's toy in the form of a modular elephant 202 that has a body part 204 with a plurality of leg parts 206 and a tail 207 joined to the body part by suction devices 208 according to the present invention. Hooves 210 are joined to the base ends of the leg parts by suction devices 208. A head 212 is joined to body part 204 via a larger dimensioned suction device 208 and a trunk 214 and ears 216 are joined to hear 212 via suction devices 208. It will be appreciated that the suction devices 208 can allow movement of the body parts relative to each other as previously described in the embodiments above. The suction devices can be different sizes and shaped depending on the size of the item to be attached to the body part and the shape of the attachment surface of the body part.

The body parts can be joined to the suction apparatus via any suitable complementary engagement means.

An aperture, recess or channel is typically defined in the body part of the toy so that fluid flowing through the aperture of the suction apparatus can vent to atmosphere externally to the toy in use.

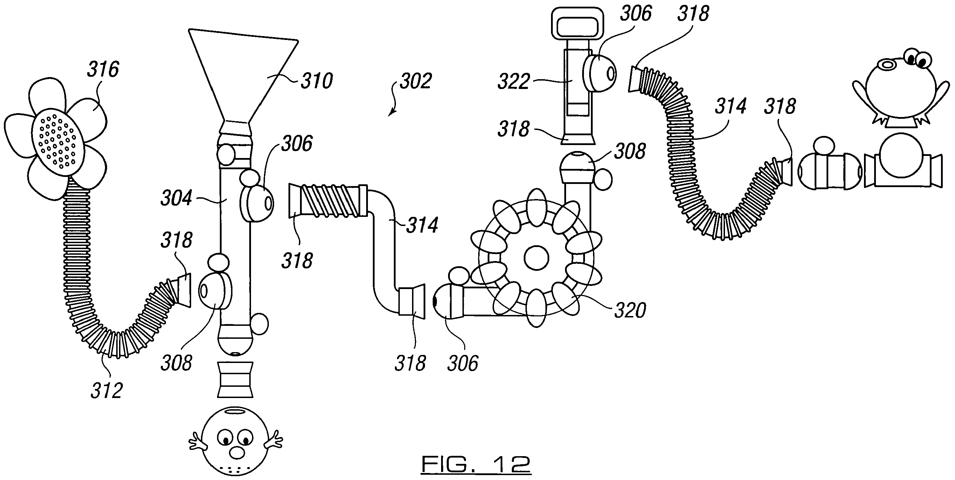

Figure 12 illustrates a further example of a child's toy 302 in which the suction apparatus can be used to join fluid transporting device together to allow fluid flow between the devices. The toy 302 comprises a body portion 304 with a channel defined therethough and two outwardly domed outlets 306, 308 defined thereon which are in fluid communication with the channel. A funnel 310 is fitted in fluid communication with the channel of body portion 304 to allow fluid, such as water, poured into the funnel to pass through the channel of the body portion and out through the domed outlets 306, 308. Suction devices 318 of a type described in figure 9 can be fitted over the domed outlets so that the aperture of the suction device is in fluid communication with the openings of the outlets 306, 308. Further fluid devices, such as hose 312, shower head 316, tubing 314, water wheel 320, pump 322 and/or the like can be connected together using the suction devices.

Figure 13 shows an example of an item in the form of a plastic top 202 engaged with the suction apparatus 2. The top 202 has an aperture 204 defined therein which is in fluid communication with a cavity 206 defined in the top and an open base 208. The open base 208 is in fluid communication with recess 20 defined on the non-suction side of the apparatus 2, which in turn is in fluid communication with aperture 12 in the base wall. As such, fluid can flow from channel 210 defined in attachment surface 212, through aperture 12, into recess 20, through cavity 206 and vent to atmosphere through aperture 204. The peripheral free edge of base wall 30 make sealing engagement with surface 212 either side of aperture 12.

The suction cup of the present invention works well on both natural and man made surfaces. The surfaces can be polished surfaces, matt surfaces having a fine texture, surfaces having imperfections defined thereon and/or the like.

## Claims

1. Suction Apparatus, said suction apparatus including a body portion having at least a first suction surface for attachment to a suitable surface in use via suction, and wherein an aperture or channel is defined in said at least first suction surface.

2. Suction apparatus according to claim 1 wherein said aperture or channel is open to atmosphere when at least the suction apparatus is in a non-suction or out-of-use position.

3. Suction apparatus according to claim 1 wherein the at least first suction surface is formed such that when said first suction surface is brought into engagement with an attachment surface and pressure is applied to the same against the attachment surface, air or fluid contained within a cavity between the suction surface and the attachment surface is forced out through the aperture or channel and/or outer peripheral free edges of the at least first suction surface, thereby forming a vacuum or partial vacuum in any remaining space between the suction surface and the attachment surface.

4. Suction apparatus according to claim 1 wherein the at least first suction surface includes a base wall and a side wall to define a cup like element, the aperture or channel defined in the base wall.

5. Suction apparatus according to claim 1 wherein the side wall is arranged to move relative to the base wall in use.

6. Suction apparatus according to claim 4 wherein peripheral free edges of the base wall and the side wall form at least four separate contact points with the attachment surface when the apparatus is viewed in cross section.

7. Suction apparatus according to claim 4 wherein the base wall is a substantially flat or linear surface.

8. Suction apparatus according to claim 4 wherein the base wall has two or more angled parts.

9. Suction apparatus according to claim 8 wherein a first angled part is provided at a substantially acute angle with respect to the side wall on a suction side of the apparatus and a second angled part is provided at a substantially obtuse angle with respect to the first angled part.

10. Suction apparatus according to claim 4 wherein the at least first suction surface is in the form of a truncated cone, with an outer free edge of the side wall having a wider diameter than a diameter of the base wall.

11. Suction apparatus according to claim 1 wherein the apparatus includes a non-suction surface in addition to the at least first suction surface, said non-suction surface including a side wall and a base wall, the non-suction surface base wall being substantially opposite to the at least suction surface base wall.

12. Suction apparatus according to claim 11 wherein engagement means are associated with the non-suction surface and/or side wall to allow one or more items to be engaged therewith in use.

13. A three dimensional structure, said structure including two or more parts, and wherein suction apparatus according to claim 1 is used to secure the two or more parts together in use.

14. A structure according to claim 13 wherein a first part is engaged with the suction apparatus to the at least first suction surface and at least a second part is engaged with the suction apparatus to a non-suction surface, the at least second part having an aperture, channel or recess defined therein to allow fluid from the suction side of the suction apparatus to pass through the suction apparatus aperture to the non-suction side of the apparatus and vent to atmosphere through the aperture, channel or recess of said at least second part.

15. A method of using suction apparatus, said suction apparatus including a body portion having at least a first suction surface, said method including the step of attaching the at least first suction surface to a suitable surface in use via suction, and wherein an aperture or channel is defined in said at least first suction surface.
